Europäisches Patentamt

European Patent Office

Office européen des brevets

(11) Publication number: **0 317 109**
**A1**

# EUROPEAN PATENT APPLICATION

(21) Application number: 88310171.9

(22) Date of filing: 28.10.88

(51) Int. Cl.⁴: **B62D 27/02** , **B62D 65/00**

(30) Priority: 05.11.87 GB 8725946

(43) Date of publication of application:
24.05.89 Bulletin 89/21

(84) Designated Contracting States:
CH DE ES FR GB IT LI NL SE

(71) Applicant: **Rolls-Royce Motor Cars Limited**
**Pyms Lane**
**Crewe Cheshire CW1 3PL(GB)**

(72) Inventor: **Gott, Anthony David**
**The Beeches Page Grove**
**Shavington Crewe Cheshire CW2 5HP(GB)**
Inventor: **Burrows, Christopher Walter**
**10 Brookland Avenue**
**Wistaston Crewe Cheshire(GB)**

(74) Representative: **Downey, William Gerrard et al**
**WILSON GUNN & ELLIS 41-51 Royal**
**Exchange Cross Street**
**Manchester M2 7BD(GB)**

(54) Composite structures and method and apparatus for making them.

(57) In forming, for example, the door apertures in an automobile, the sub-structure (10) is formed with lower dimensional accuracy and the apertures defined to a higher dimensional accuracy by moulding sections (11) defining those apertures from synthetic plastics material and applying them to the sub-structure by means of adhesive (13) positioned accurately to the vehicle datum by carrier (12). This simplifies assembly, facilitates production and lowers production costs.

FIG. 3

EP 0 317 109 A1

Xerox Copy Centre

## COMPOSITE STRUCTURES AND METHOD AND APPARATUS FOR MAKING THEM

The present invention relates to composite structures and to a method of and apparatus for making them.

The invention is particularly, but not exclusively, applicable to the manufacture of vehicles. In their manufacture, insertions in the basic body shell such as doors, windows, boot and bonnet lid must be introduced with great accuracy to produce an acceptable finished product. In conventional practice this is achieved with metal forming and fabricating techniques, which requires expensive tooling, sophisticated assembly jigs and checking fixtures. Even with this arrangement much adjustment of, for example, a door in a door aperture may be necessary after forming and fabricating the door aperture and/or door.

An objective of embodiments of the present invention is to avoid the complications and expense of this conventional practice.

According to one aspect of the present invention, there is provided a composite structure comprising a sub-structure of lower dimensional accuracy, and a finishing structure of higher dimensional accuracy moulded from synthetic plastics material supported on the sub-structure.

According to another aspect of the present invention there is provided a method of increasing the surface dimensional accuracy of a manufactured part including the steps of producing a sub-structure of lower dimensional accuracy and supporting a finishing structure comprising a moulding of synthetic plastics material of higher dimensional accuracy thereon.

According to a further aspect of the present invention, there is provided apparatus for increasing the surface dimensional accuracy of a manufactured product comprising means for supporting a sub-structure in a desired position, means for holding a finishing structure in a desired positional relationship to the sub-structure determined by reference to a datum and means for heating the assembly so produced to expand an adhesive compound disposed between the two structures to attach the two structures together.

In a preferred embodiment of the invention, the sub-structure is a metal and the finishing structure is a synthetic plastics material. The metal may be steel or aluminium. The synthetic plastics material may be a thermosetting material or thermoplastics. The thermosetting material may be a polyurethane, a polyurea, an epoxy, an unsaturated polyester or an acrylic. The thermoplastic may be polypropylene or ABS. Thermoplastics material may be vacuum formed or injection moulded. The plastics material may be reinforced, generally with glass usually in fibrous form.

The finishing structure may be attached to the sub-structure by means of an adhesive. This may be in the form of a tape, film or a bead which may extend around the periphery of both structures. The adhesive may be expandable when heated. Suitable adhesive may be an epoxy, an acrylic or a urethane.

In order to attach the finishing structure to the sub-structure in a preferred embodiment, the finishing structure is mounted in a carrier. The carrier is effectively a mould formed to the shape of the finished surface. Adhesive, in the form of a film or tape is applied to the sub-structure or finishing structure. The carrier is then accurately positioned relative to a datum on or chosen relative to the sub-structure. This assembly is then heated to expand the adhesive. The expanding adhesive pushes the finishing structure against the carrier which supports it accurately in relation to the datum. The adhesive cures with the finishing structure correctly positioned by the carrier. The assembly may be heated in an oven or by means of electrical heating elements in the carrier.

In order that the invention may be more clearly understood, one embodiment thereof will now be described, by way of example, with reference to the accompanying drawings, in which:-

Figure 1 diagrammatically shows an automobile body shell in which areas where the invention can be applied are identified by heavy shading.

Figure 2 is a sectional view through a door pillar forming part of the body shell of figure 1, and

Figure 3 is a sectional view through a door pillar equivalent to that of figure 2 but formed in accordance with the present invention.

Figure 4 diagrammatically shows in side elevational view one form of apparatus according to the invention,

Figure 5 diagrammatically shows in side elevational view the apparatus at a subsequent stage in the method of the invention,

Figure 6 diagrammatically shows an end elevational view of the apparatus of Figure 5,

Figure 7 is a diagrammatic cross-sectional view of a part of the apparatus of Figures 5 & 6,

Figure 8 is a view corresponding to Figure 4 both of another embodiment of the invention,

Figure 9 is a plan view of the embodiment of Figure 8,

Figures 10a, 10b and 10c respectively show three views plus sections of a bodyside carrier that fits within the embodiment of Figures 8 and 9, and

Figures 11a and 11b respectively show two views of the front and rear carriers that fit within the embodiment of Figures 8 and 9.

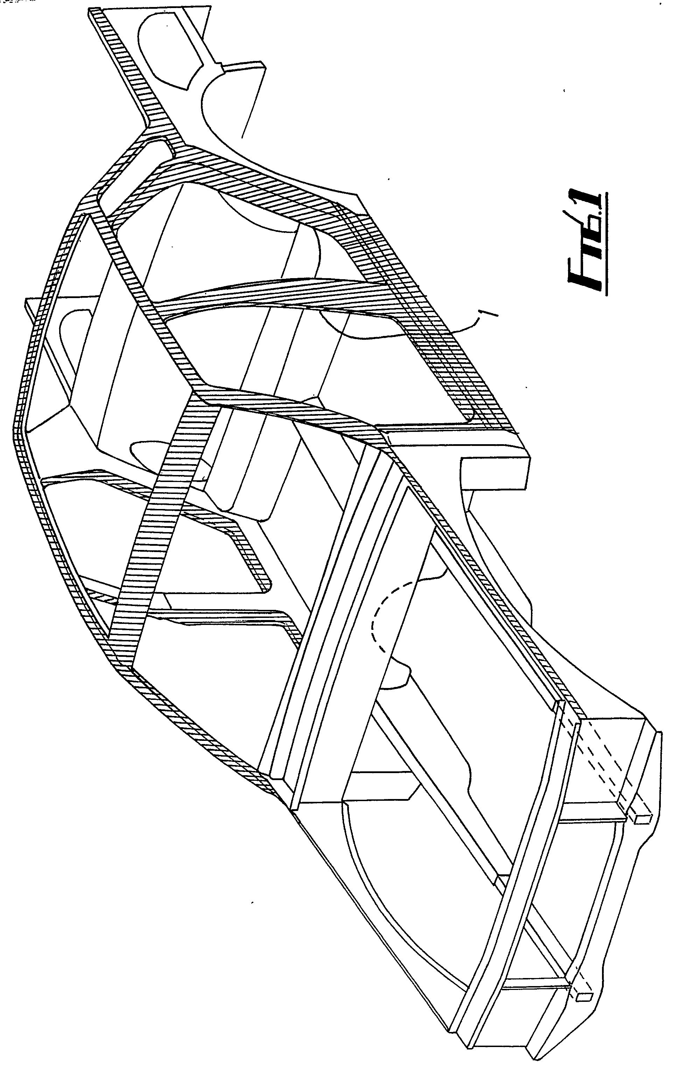

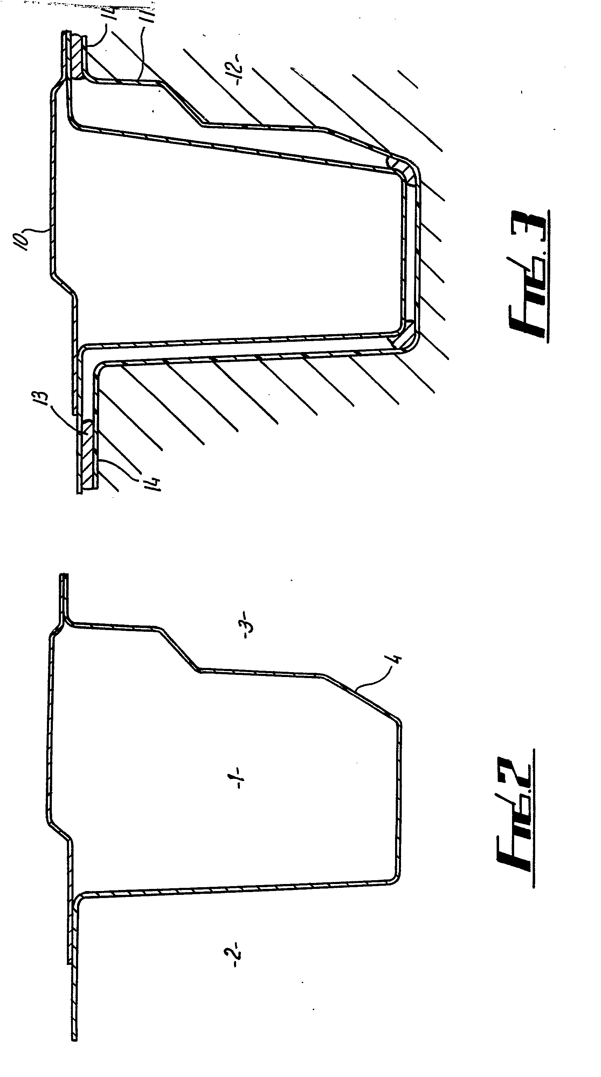

Referring to the drawings, the automobile body shell of Figure 1 illustrated in heavy shading those areas of the automobile which would benefit from the invention. These generally comprise the window apertures, door apertures and boot and bonnet apertures. Figure 2, shows a section through a conventional sheet metal door pillar 1 which has a complex external shape 4 and partly defines two door apertures generally referenced 2 and 3. This door pillar is pressed into shape. Any inaccuracies in the pressing lead to difficulties in fitting the doors which leads to increased production time and costs.

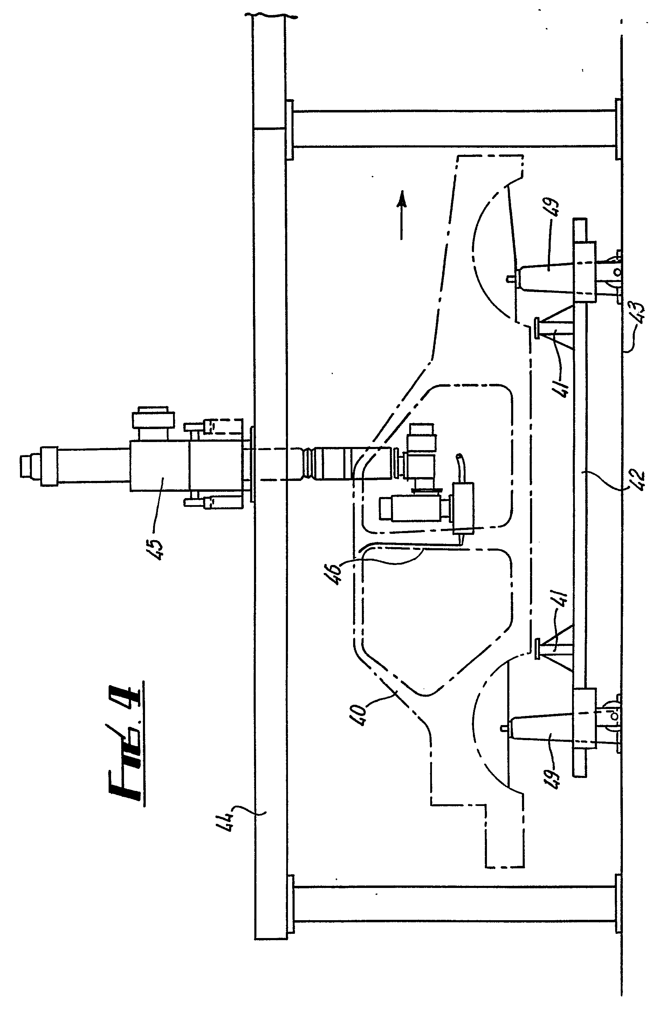

Figure 3 shows a door pillar equivalent to that of Figure 2 manufactured in accordance with the invention. In this equivalent pillar a sub-structure 10 is produced from sheet metal by the much simpler and therefore less expensive process of bending rather than pressing. This is possible because the sub-structure does not require the complex external shape 4 of the sheet metal pillar of Figure 2. This complex external shape is provided instead by a finishing structure comprising a thin synthetic plastics material moulding 11. The moulding 11 is produced using any preferred plastics moulding route, such as for example, vacuum forming, blow moulding, reinforced composite moulding or resin injection moulding. Generally the synthetic plastics material chosen for the moulding will at least partly determine the moulding method chosen. If the material chosen is a thermosetting material then it will generally be chosen from the group of materials comprising polyurethanes, polyureas, epoxys, unsaturated polyesters and acrylics. If the material is a thermoplastics material, it will generally be polypropylene or ABS and formed by vacuum forming or injection moulding. The thickness of the moulding will vary over its surface and will depend upon the moulding method chosen but will generally be from 0.5mm and 6.0mm. The surface of the moulding may be textured if desired. Colouring may be carried out either by adding colourant to the base plastics material or by painting the finished moulding. The plastics of the moulding may be reinforced with, for example, glass fibres.

The moulding 11 so produced is placed into a carrier 12. A tape film or bead of a heat expandable adhesive is applied locally to the sub-structure 10. The assembly comprising carrier 12 and moulding 11 is accurately positioned relative to a vehicle datum and therefore relative to the sub-structure 10 and the whole is heated either by placing it in an oven or by using a heated carrier. On heating the adhesive 13 it expands to fill whatever gap exists between sub-structure 10 and moulding 11 and attach them together by forcing the moulding 11 against its supporting carrier 12. The carrier is so designed to allow movement of the moulding 11, yet constrain the moulding 11 where positioinal accuracy is important, for example, to the door sealing flanges shown at 14 of Figure 3. The expansion ratio of the adhesive is therefore chosen to give minimal excess material exudation and to achieve optimal time/temperature curing profiles for production. The adhesive is polymeric, for example, an epoxy, acrylic or a urethane. After the adhesive has cured the carrier 12 is removed leaving behind the moulding 11 as the new composite structure surface.

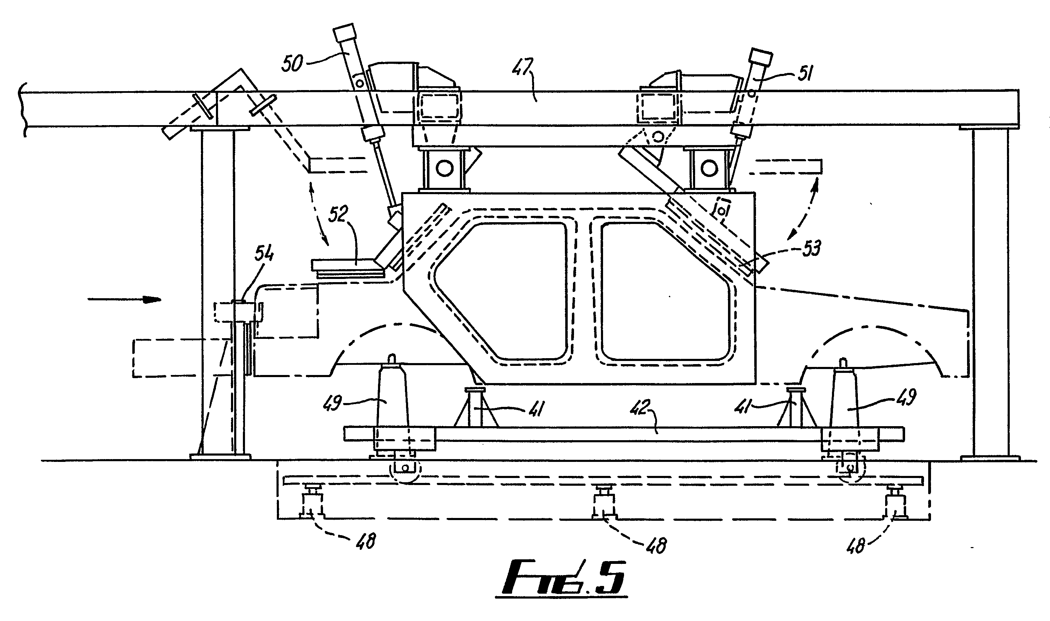

Figures 4,5 and 6 shows stages in the implementation of the method in which the assembly is heated by using a heated carrier. The automobile body 40 is supported on support 41 fixed on a trolley 42 adapted to run on rails 43. The body 40 on the trolley is positioned within a static frame 44 (see Figure 4). An adhesive dispensing robot 45 is mounted on an overhead gantry. In order to locate the body with respect to the frame, it is suspended on location pins (not shown) by lowering the trolley on Harcross lifters. After applying adhesive 46 to the appropriate areas usually the peripheries of the door apertures and the boot and windscreen aperture the trolley 42 is raised and forwarded on the trolley lifting the body 40 to carry it to the next stage.

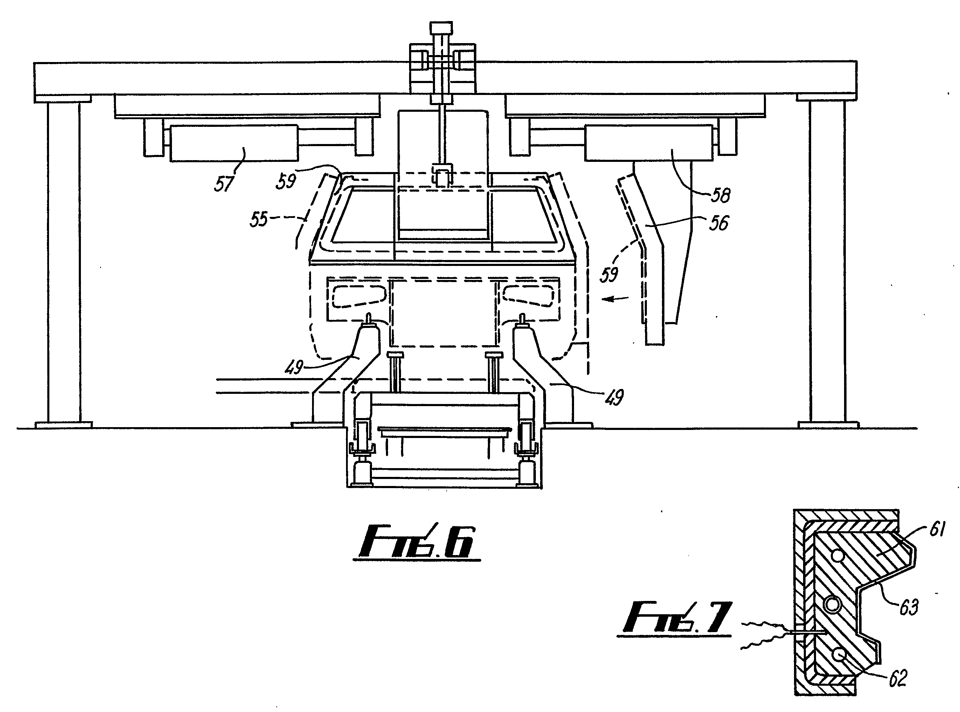

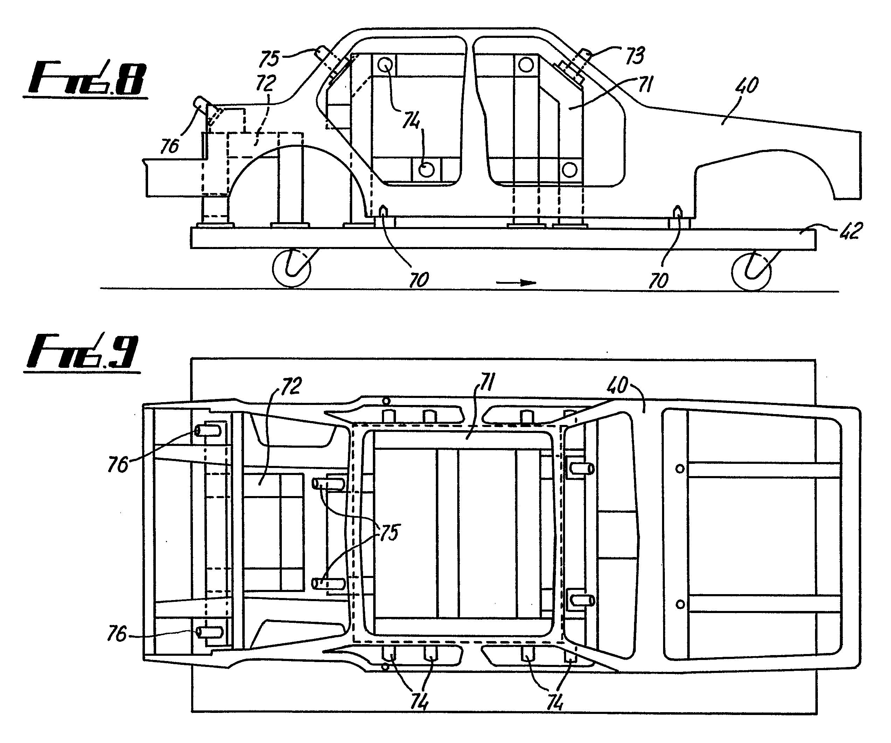

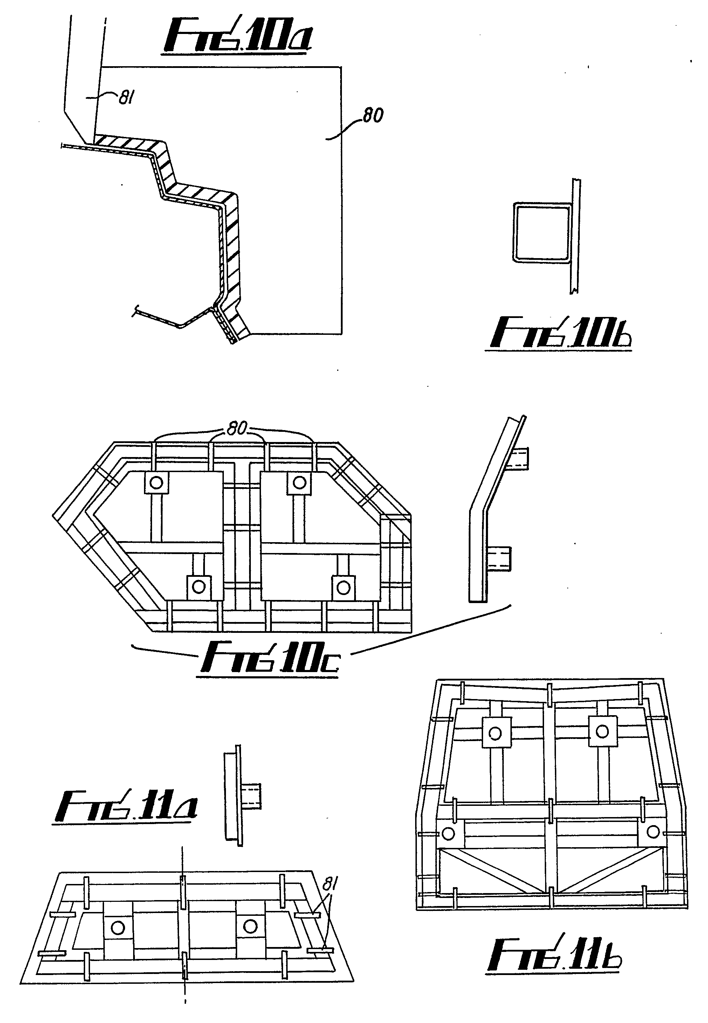

As with the earlier adhesive application stage, the body 40, still on the trolley 42 is located within a static frame 47 in Figure 5. This frame 47 is an extension of frame 44. The trolley 42 is lowered on Harcross lifters 48 leaving the body supported on locating pins 49 (see also Figure 6) and thereby accurately located within the frame 44. Fixed to the frame 44 are carriers for applying the various aperture defining sections to the already applied adhesive. Thus carriers on pivotally mounted piston and cylinder devices 50 and 51 are provided for the boot and rear screen section 52 and the windscreen section 53 respectively are provided. These may be pivoted from an upper position (shown in dashed outline) in which the appropriate sections are mounted to a lower position in which these sections are pressed onto the adhesive. Further pivoting rear frames 54 are provided to locate the boot and rear screen section 52 on its lower side. Carriers 55 and 56 are mounted on laterally extending slides 57 and 58. In the retracted position door aperture sections 59 are mounted on them and once mounted are slid into the body on the slides 57 and 58 and pressed against the adhesive. These various sections once pressed against the adhesive are seated by the carriers which support them. A section through a carrier is shown in Figure 7. This comprises a cast zinc alloy body having good thermal conductivity and wear properties and providing on one face a mould for the section 63 to be heated. Mineral insulated resistance heater elements 62 are cast in for heating up the body, chromel-alumel therocouples extend into the body for temperature control, and inconel tube are cast in for water cooling. Once the carriers with their various sections are in position, heat supplied electrically to them heat the adhesive to expand and cure it as already described cooling of the carriers then permit earlier handling of the body than would otherwise be possible.

Figures 8 and 9 respectively show side elevational and plan view of the assembly when adhesive curing is to take place in an oven. The automobile body 40 is supported on locating pins 70 on the trolley 42. The trolley 42 supports two frames 71 and 72 which are located within the body 40 when the body is in position on the trolley. Both frames have locating pins extending therefrom. Frame 71 has two pins 73 for locating the windscreen aperture and two sets of four pins 74 on opposite sides respectively of the frame for locating the door apertures. Two further pins 75 on frame 71 and two pins 76 on frame 72 locate the rear window and boot apertures. The combination of the master locating pins 70 for the body and locating pins 73, 74, 75 and 76 ensure that the various aperture mouldings may be accurately positioned relative to the body 40. After positioning the body 40 on the trolley 42 by means of the locating pins 70, adhesive is applied to appropriate parts of the body by means of an overhead robot in similar manner to that of the previously described method( see Figure 4). The various sections defining the door, front and rear screen, boot and engine compartment apertures are pressed onto the adhesive, located using the locating pins 73 to 76 and locked into position using shot bolts (not shown). The complete assembly is then transferred to a curing oven and heated in that oven until the adhesive is cured.

The aperture defining sections connected to the vehicle body 40 are of complex cross section. Rather than have the body on which they are supported similarly complex, which would be both expensive and bulky spacers 80 are provided at intervals between each section and the adjacent body. These are shown in Figures 10 and 11. Figure 10 shows a cross-section through the cantrail and the spacers at one point on the cantrail between the cantrail and the body. Figure 11 shows an elevation of a section defining the door apertures with the spacers 80 indicated at various points around the section. Spring loaded fingers 81 may also be used to hold the various aperture mouldings against their respective carriers whilst adhesive curing takes place.

In the above described embodiment the inherently high dimensional consistency of plastics mouldings when in-situ moulded on the sub-structure of the vehicle body will achieve:-

1) Very high positional and surface form accuracy at low cost.

2) The ability to change position and surface form on the same sub-structure and thereby to be able to produce bodies with differing aesthetic features based on the same sub-structure.

3) A moulded surface which either does not require further treatment or is of a quality to directly accept vehicle body paint treatment without requiring clean up and showing no visible panel joints.

The above embodiment has been described by way of example only and many variations are possible within the scope of the invention. For example, the adhesive may be part of the moulding. The moulding may be coated with paint primer or formed with surface specially adapted to accept a paint finish. Adhesive 13 may not necessarily be a type which expands on heating. A normal non-foaming adhesive which simply cures during heat application could be used. In that case the bead of adhesive would be squeezed during the application of the aperture mouldings to ensure good quality bonding.

**Claims**

1. A composite structure characterised by a sub-structure (10) of lower dimensional accuracy, and a finishing structure (11) of higher dimensional accuracy moulded from synthetic plastics material supported on the sub-structure.

2. A method of increasing the surface dimensional accuracy of a manufactured part characterised by the steps of producing a sub-structure (10) of lower dimensional accuracy and supporting a finishing structure (11) comprising a moulding of synthetic plastics material of higher dimensional accuracy thereon.

3. Apparatus for increasing the surface dimensional accuracy of a manufactured product characterised by means for supporting a sub-structure (10) in a desired position, means (12) for holding a finishing structure (11) in a desired positional relationship to the sub-structure (10) determined by reference to a datum and means for heating the assembly so produced to expand an adhesive compound (13) disposed between the two structures to attach the two structures together.

4. A composite structure as claimed in claim 1, in which the sub-structure (10) is metal and the finishing structure (11) is a synthetic plastics material.

5. A composite structure as claimed in claim 1, in which the finishing structure is attached to the sub-structure by means of an adhesive.

6. A method as claimed in claim 2, in which the finishing structure (11) is mounted in a carrier (12).

7. A method as claimed in claim 6, in which adhesive (13) is applied to the substructure (10) and/or finishing structure (11) and the carrier (12) with attached finishing structure (11) applied to the substructure(10).

8. A method as claimed in claim 7, in which the assembly is heated to expand the adhesive (13) thus pushing the finishing structure (11) against the carrier (12) and curing the adhesive.

9. Apparatus as claimed in claim 3, in which the means for supporting the substructure comprises a trolley (42) for moving the structure between working positions.

10. Apparatus as claimed in claim 3, or 9, in which the means for holding a finishing structure comprises a carrier (55, 56) which may be moved between a first position in which a finishing structure (59) is loaded onto it and a second position in which that structure is held in the desired positional relationship with the sub-structure (40).

**Fig.1**

Neu eingereicht / Newly filed
Nouvellement déposé

EP 0 317 109 A1

Neu eingereicht / Newly filed
Nouvellement déposé

**FIG.2**

-2-   -1-   -3-

4

**FIG.3**

13   10

14   14   11   12

EP 0 317 109 A1

# Fig. 4

EP 0 317 109 A1

FIG.5

EP 0 317 109 A1

EP 0 317 109 A1

**Fig. 6**

**Fig. 7**

57 59 58 56 55 59 49 49 61 63 62

Fig.8

Fig.9

_Fig.10a_

_Fig.10b_

_Fig.10c_

_Fig.11a_

_Fig.11b_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | GB-A-2 196 584 (WARDILL)<br>* column 4, lines 20-27; abstract; figure 8 *<br>--- | 1,2,4 | B 62 D 27/02<br>B 62 D 65/00 |
| A | GB-A-1 237 615 (FORD)<br>* whole document *<br>--- | 1-5 | |
| A | EP-A-0 076 934 (FIAT)<br>* whole document *<br>--- | 1-5,9, 10 | |
| A | EP-A-0 240 470 (FIAT)<br>* claim 4 *<br>----- | 1-5 | |

TECHNICAL FIELDS SEARCHED (Int. Cl.4)

B 62 D   25/00
B 62 D   27/00
B 62 D   29/00
B 62 D   65/00

The present search report has been drawn up for all claims

| Place of search | Date of completion of the search | Examiner |
|---|---|---|
| BERLIN | 25-01-1989 | KRIEGER P O |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)